# FASCICULE DE BREVET EUROPEEN

(11) **EP 4 425 142 B1**
(45) Date de publication et mention de la délivrance du brevet: **29.01.2025**
(21) Numéro de dépôt: 23211664.0
(22) Date de dépôt: 23.11.2023
(51) Int. Cl.: H04B 10/073, G02B 6/38, G01M 11/00

(54) **SYSTÈME ET PROCÉDÉ D'IDENTIFICATION ET DE VÉRIFICATION D'UNE LIAISON PAR FIBRE OPTIQUE**
SYSTEM UND VERFAHREN ZUR IDENTIFIZIERUNG UND ÜBERPRÜFUNG EINER GLASFASERVERBINDUNG
SYSTEM AND METHOD FOR IDENTIFYING AND VERIFYING AN OPTICAL FIBER LINK

(30) Priorité: 03.03.2023 FR 2301982
(43) Date de publication de la demande: 04.09.2024
(73) Titulaire: Free Reseau, 75008 Paris (FR)
(72) Inventeur: LABORIE, Didier, 34750 Villeneuve-les-Maguelone (FR)
(74) Mandataire: Dupuis-Latour, Dominique

(56) Documents cités:
- EP-A1- 2 818 843
- WO-A1-99/24856
- FR-A1- 3 108 736
- US-A1- 2018 340 861

## Description

L'invention concerne l'identification et la vérification des liaisons par fibre optique dans les réseaux de communication, notamment pour l'interconnexion de dispositifs de terminaison intérieure optique (DTIO) avec des points de mutualisation (PM) d'un réseau de distribution par fibre optique d'un opérateur de communication.

### Domaine technique de l'invention

Dans une telle application, lors du raccordement d'un abonné ou de toute autre intervention sur le réseau, il est nécessaire d'identifier sur le tableau du point de mutualisation, qui regroupe un très grand nombre de terminaisons de fibre, la terminaison particulière qui aboutit au DTIO de l'abonné concerné par l'intervention.

Une fois cette terminaison de fibre identifiée, il sera par exemple possible de raccorder l'abonné au réseau de l'opérateur par branchement d'un cordon de brassage assurant l'interfaçage entre le réseau de distribution et le réseau de l'opérateur.

### État de la technique antérieure

La technique habituellement utilisée à cet effet consiste à se servir d'un appareil dit "VFL" (*Visual Fault Locator*), qui est un dispositif en forme de stylo comportant une source lumineuse telle qu'une diode laser produisant une lumière cohérente dans le domaine des longueurs d'onde visibles. La lentille de sortie de la source lumineuse est couplée à la terminaison de fibre à l'une des extrémités de cette dernière (par exemple au niveau du DTIO), de manière que le rayonnement visible puisse se propager sur toute la longueur de la fibre jusqu'à l'extrémité opposée de celle-ci, située au niveau de la grille de brassage du PM.

Il suffit alors à un opérateur situé face à cette grille de brassage d'observer toutes les terminaisons de fibre jusqu'à trouver celle qui émet de la lumière visible, qui sera de fait celle illuminée à l'autre extrémité par la source laser du VFL.

Cette manipulation permet non seulement de repérer telle ou telle fibre, mais également d'en vérifier l'intégrité puisque la présence d'un signal visible confirme que la transmission du signal s'est bien opérée sur toute la longueur de la fibre.

Par sécurité, les VFL utilisés à cet effet mettent en oeuvre des lasers de Classe 2 selon IEC 60825-1 édition 3.0 du 15 mai 2014 (version en vigueur au jour du dépôt de la présente demande) dont la puissance de sortie n'excède pas 1 mW (0 dBm), qui n'imposent aucun équipement de protection individuel (lunettes) ni restriction d'emploi particulière, la protection de l'œil par le réflexe palpébral étant considérée comme suffisante.

Cette technique est efficace et très facile à mettre en oeuvre. Elle permet un repérage simple et rapide d'une terminaison de fibre sur une grille de brassage pouvant comporter des dizaines de terminaisons accolées dans un espace très réduit.

Le FR 3 108 736 A1 (Laborie et al.) décrit un connecteur d'extrémité de fibre permettant de visualiser le signal optique visible au niveau du PM même si ce connecteur est enfiché sur la grille de brassage.

Cette technique est toutefois limitée à des longueurs de fibre ne dépassant pas 5 à 7 km.

En effet, les fibres optiques utilisées pour les réseaux de distribution sont des fibres monomode opérant dans une bande utile située dans l'infrarouge lointain (typiquement 1260 à 1625 nm), avec une très faible atténuation dans cette bande. En revanche, dans la bande des longueurs d'onde visibles - qui n'est pas leur domaine de fonctionnement nominal - leur atténuation est beaucoup plus forte, de l'ordre de 7 dB/km environ. De fait, pour des longueurs de fibre importantes, l'illumination de la terminaison au niveau de la grille de brassage distante sera de moins en moins visible, surtout dans un environnement d'observation difficile (peu de pénombre) ou, à l'autre extrémité, des conditions d'injection non optimales (couplage imparfait du VFL à l'extrémité de la fibre, VFL avec diode ou optique de moindre qualité, etc.).

Or les longueurs de fibre des réseaux de distribution peuvent être très importantes entre leurs extrémités, de plusieurs kilomètres dans les zones de faible densité de population, et peuvent atteindre 10 km, voire plus.

La technique d'identification et de contrôle que l'on vient d'exposer n'est donc plus applicable.

Une *première solution* consiste à utiliser au point d'injection un laser de puissance supérieure, par exemple un VFL de 20 à 30 mW. Mais il ne s'agit alors plus d'un dispositif de Classe 2, et l'illuminateur laser est potentiellement dangereux si un faisceau direct ou une réflexion atteint l'œil non protégé.

L'opérateur doit alors impérativement être équipé d'un équipement de protection individuelle de sécurité (lunettes de protection) et la manipulation doit être faite selon un protocole précis, sécurisé mais contraignant, impliquant des formations et des sensibilisations préalables à l'utilisation de ces dispositifs dangereux - et au surplus onéreux.

Le port de lunettes de protection, obligatoire ou toutes circonstances, a également pour inconvénient de rendre plus difficile le repérage visuel de la terminaison éclairée au niveau de la grille de brassage.

L'augmentation de portée est notable, environ 10 km pour un VFL de 30 mW, mais elle est toujours sujette à l'atténuation linéique importante de la fibre dans le domaine du visible (7 dB/km). Des portées plus élevées encore seraient théoriquement probables, mais avec des lasers très puissants donc classés très dangereux, interdits pour un usage à l'intérieur et donc non utilisables dans des applications de terrain, qui sont souvent pratiquées dans des conditions d'environnement difficiles.

Une *seconde solution* consiste à injecter dans la fibre non pas une lumière visible, mais une lumière dans le domaine de l'infrarouge correspondant aux longueurs d'onde pour lesquelles la fibre est caractérisée (typiquement 1260 à 1625 nm). L'atténuation linéique sera alors beaucoup plus faible, et les classes des laser émettant ces rayonnements sont moins restrictives que celles des lasers visibles.

L'inconvénient, en contrepartie, est que ces rayonnements ne sont pas dans le spectre sensible de l'œil humain et qu'il est nécessaire de recourir, du côté de la grille de brassage, à un détecteur de rayonnement infrarouge, qui doit être connecté successivement à chacune des terminaisons de fibre de la grille du PM jusqu'à trouver celle où le signal infrarouge a été injecté à l'autre extrémité. La simplicité et l'immédiateté du repérage par simple observation visuelle de la grille de brassage, sans aucun instrument, est donc perdue.

Le US 2018/340861 A1 décrit un dispositif de détrompage et de contrôle de rectitude de connecteurs pour des liaisons multifibre (typiquement au standard MTP/MPO). Le dispositif permet de mesurer l'atténuation des différents brins, et peut être adapté pour fonctionner sur des câbles en fibres multimode et en fibres monomode, donc avec des longueurs d'ondes respectives différentes. Ce dispositif n'est toutefois pas adapté à l'application exposée plus haut, en particulier il ne permet pas de rendre visible à l'œil nu, via une image vidéo du tableau de brassage, un rayonnement infrarouge émis au niveau d'un point de mutualisation.

### Exposé de l'invention

Le but de l'invention est de remédier aux inconvénients et limitations exposés plus haut, en proposant un système et un procédé d'identification et de vérification d'une liaison par fibre optique utilisable pour des longueurs de fibre pouvant atteindre 10 km, voire plus, de façon immédiatement perceptible et identifiable à l'œil nu, et qui n'impose à l'opérateur le port d'aucun équipement de protection ni l'observation de contraintes de sécurité particulières lors de l'intervention.

Le système de l'invention est exposé dans la revendication 1 et le procédé, dans la revendication 8. Les sous-revendications visent des mises en oeuvre avantageuses, non limitatives, de l'invention.

### Brève description des dessins

On va maintenant décrire un exemple de mise en oeuvre de l'invention, en référence aux dessins annexés où les mêmes références désignent d'une figure à l'autre des éléments identiques ou fonctionnellement semblables.
La Figure 1 est une vue schématique d'une liaison par fibre optique entre un équipement d'abonné et un tableau de brassage d'un point de mutualisation distant.
La Figure 2 illustre la technique conventionnelle mise en oeuvre pour l'identification et la vérification de la fibre optique d'une liaison telle que celle de la Figure 1.
La Figure 3 est homologue de la Figure 2, pour la technique selon l'invention.

### Description détaillée d'un mode de réalisation de l'invention

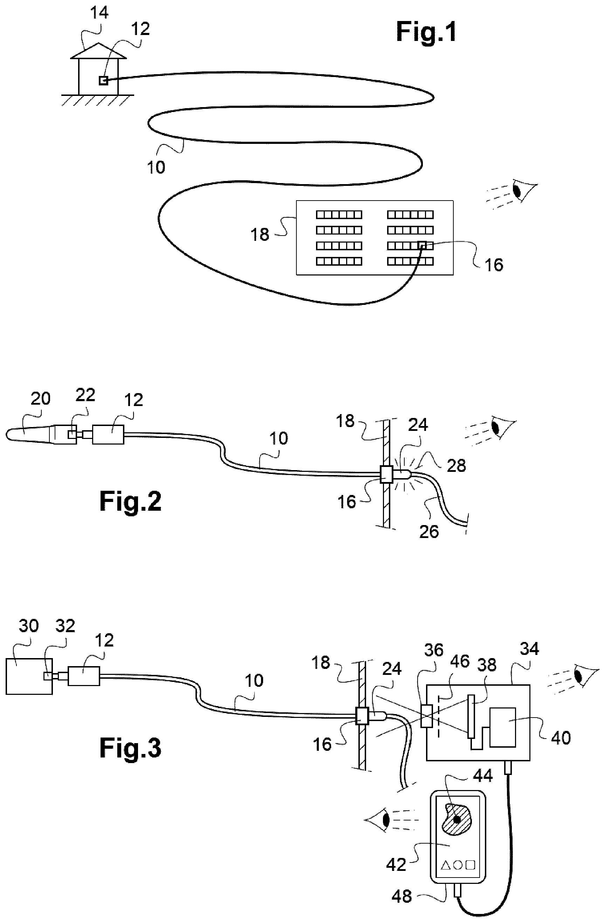

Sur la Figure 1, la référence 10 désigne une fibre optique d'un réseau de distribution.

Les fibres optiques des réseaux de distribution sont généralement des fibres monomode opérant dans le domaine de l'infrarouge dans la bande utile 1260-1625 nm (ces valeurs n'étant bien entendu aucunement limitatives), qui est la bande habituellement utilisée pour les échanges de données avec les abonnés des opérateurs de télécommunication.

La fibre optique 10 s'étend de façon ininterrompue d'une première extrémité 12, où elle est par exemple reliée à un dispositif de terminaison intérieure optique (DTIO) installé dans une habitation 14, jusqu'à un point d'arrivée 16 à son extrémité opposée, par exemple au niveau d'une grille de brassage 18 d'un point de mutualisation (PM). La grille de brassage 18 permet de rassembler dans une armoire de rue les terminaisons d'un très grand nombre de fibres reliées à un ensemble d'habitations d'un même réseau de distribution.

Dans les zones peu denses, la longueur de la fibre entre le DTIO 12 et le point d'arrivée 16 est souvent supérieure à 1 km, et peut atteindre plusieurs kilomètres, parfois jusqu'à 10 km, voire plus.

La grille de brassage permet, au moyen d'un cordon de brassage, de raccorder le point d'arrivée 16 de chaque habitation du réseau de distribution à une terminaison homologue du réseau de l'opérateur auquel est abonné l'utilisateur.

Il convient, pour un opérateur devant effectuer ce raccordement, de repérer sur la grille de brassage la position du point d'arrivée 16 correspondant à l'abonné en question.

L'identification de ce point d'arrivée est généralement opérée selon une technique illustrée Figure 2, avec, côté DTIO, un dispositif dit "VFL" (*Visual Fault Locator*) 20 en forme de stylo ou analogue comportant une source lumineuse laser 22 émettant une lumière dans le domaine du spectre visible, perceptible par l'œil (correspondant, selon la définition CIE, aux longueurs d'onde comprises entre 380 et 780 nm).

Les VFL utilisés à cette fin sont des dispositifs de faible puissance de Classe 2 selon IEC 60825-1 édition 3.0, c'est-à-dire émettant une puissance lumineuse non supérieure à 1 mW (0 dBm) et ne nécessitant aucune précaution d'emploi particulière.

Le VFL 20 est emboîté sur une fiche de connecteur optique à l'extrémité 12 de manière à coupler la source laser 22 à la fibre optique et permettre ainsi l'injection dans celle-ci d'un stimulus optique en lumière visible.

A l'autre extrémité, côté point d'arrivée 16, la lumière visible injectée par la source du VFL produit un point lumineux visible à l'emplacement de la terminaison de fibre (si aucune fiche n'est insérée à cet emplacement de la grille de brassage), ou au travers d'un bouchon translucide obturant le point d'arrivée, ou encore, comme illustré, une illumination 28 du corps translucide d'une fiche de connecteur 24 d'une bretelle de raccordement 26 déjà insérée à cet endroit (ce corps translucide peut être par exemple réalisé selon les enseignements du FR 3 108 736 A1 précité).

Cette technique de repérage visuel est très simple à mettre en oeuvre et permet d'identifier rapidement non seulement celui des points d'arrivée qui correspond à l'abonné concerné par la recherche, mais également de s'assurer de l'intégrité de la fibre sur toute sa longueur, dans la mesure où une absence de lumière repérable au niveau de la grille de brassage peut résulter d'un défaut ou d'une rupture de la fibre empêchant le signal de se propager convenablement d'une extrémité à l'autre.

Comme on l'a indiqué en introduction, cette technique n'est cependant utilisable que pour des fibres dont la longueur ne dépasse pas quelques kilomètres, habituellement jusqu'à environ 5 à 6 km en conditions réelles. L'invention propose un système et un procédé d'identification permettant de s'affranchir de cette limitation, tout en conservant la simplicité de mise en oeuvre par les opérateurs sur le terrain.

Selon l'invention, comme illustré Figure 3, le stimulus optique du côté de la terminaison d'abonné 12 est produit par un dispositif portatif 30 dont la source lumineuse 32 émet non pas dans le domaine du visible, mais dans le domaine du proche infrarouge (NIR) dont les longueurs d'onde sont comprises entre 780 et 1300 nm, en deçà du domaine de l'infrarouge moyen ou de l'infrarouge lointain (longueurs d'onde supérieures à 1300 nm).

De préférence, la longueur d'onde du stimulus optique émis par la source NIR 32 est située autour de 850 nm, par exemple 850 nm ± 10 %. En effet, on trouve aisément des composants pouvant émettre à cette longueur d'onde avec une puissance limitée à +10 dBm environ. Ces composants sont généralement des VCSEL (diodes laser à cavité verticale émettant par la surface) contrairement aux illuminateur à diodes laser conventionnelles (à semi-conducteur émettant par la tranche) que l'on trouve dans les VFL à lumière visible.

Une source NIR de +10 dBm reste conforme aux prescriptions de la Classe 1M selon IEC 60825-1 édition 3.0, c'est-à-dire qu'elle ne nécessite pas d'équipement de protection individuelle (lunettes) ni de précautions particulières de mise en oeuvre (utilisation possible même en intérieur). Compte tenu de l'absence de sensibilité de l'œil au rayonnement infrarouge, il est en effet possible d'émettre une puissance plus importante que pour une lumière visible, sans risque de dommage qui serait causé par une exposition accidentelle.

La source de lumière NIR 32 est couplée à l'extrémité 12 de la fibre 10 du côté du DTIO de l'abonné de la même manière qu'avec un VFL conventionnel, c'est-à-dire par enfichage sur la fiche de terminaison 12 de la fibre 10.

Le signal infrarouge se propage jusqu'à l'autre extrémité 16 située au niveau de la grille de brassage 18, de la même façon que dans le cas précédent mais avec (i) une intensité supérieure du fait de l'utilisation d'une source de lumière de plus grande puissance et (ii) une atténuation moindre : en effet, les fibres monomode des réseaux de distribution présentent dans le proche infrarouge une atténuation de l'ordre de 3 dB/km seulement, notablement inférieure à leur atténuation dans le visible, de l'ordre de 7 dB/km.

Pour visualiser le rayonnement infrarouge au niveau du point d'arrivée 16, l'opérateur utilise une caméra 34 munie d'un objectif 36 produisant sur un capteur 38 une image des points d'arrivée de la grille de brassage.

On pourra avantageusement tirer parti du fait que les capteurs CCD/CMOS des caméras grand public de type "webcam" sont tous sensibles à une grande largeur de spectre, allant au-delà du spectre visible et incluant le proche infrarouge NIR. Habituellement, pour éviter un éblouissement et une meilleure restitution des couleurs dans le spectre visible ces webcams sont munies d'un filtre anti-IR qui bloque la partie du spectre non visible située dans l'infrarouge. Pour mettre en oeuvre l'invention, il suffira dès lors de supprimer ce filtre anti-IR de manière à permettre au rayonnement NIR produit au niveau du point d'arrivée 16 de traverser l'objectif 36 et de frapper le capteur 38.

L'image formée sur le capteur 38 peut être par exemple présentée sur un afficheur 34 via une interface de conversion 40. Le point d'arrivée recherché pourra être immédiatement repéré sur l'image par un halo lumineux 44 autour de la terminaison de fibre diffusant le stimulus infrarouge produit par la source NIR 32, et par cette seule terminaison de fibre.

L'écran de visualisation 42 peut être l'afficheur d'un téléphone portable 48 branché sur la caméra 34, ce qui permet de mettre en oeuvre l'invention avec des moyens très simples et peu coûteux à partir de composants préexistants (un téléphone portable et une webcam dont le filtre anti-IR aura été retiré).

Pour améliorer le contraste il est possible d'ajouter à la caméra un filtre 46 centré sur la longueur d'onde émise par la source 32 (c'est-à-dire un filtre centré sur une longueur d'onde de 850 nm dans l'exemple illustré) de manière à augmenter encore le contraste, notamment pour opérer dans des conditions peu propices à l'observation, par exemple dans le cas d'un PM situé en extérieur dans un environnement ensoleillé.

## Revendications

1. Un système d'identification et de vérification d'une liaison par fibre optique dans un réseau de communication interconnectant par des fibres optiques une pluralité d'équipements de terminaison optique avec des terminaisons respectives groupées au sein d'un point de mutualisation distant (18),
dans lequel une fibre optique (10) s'étend entre un équipement situé à une première extrémité (12) de la fibre et une terminaison située à une seconde extrémité (16), opposée, de la fibre,
dans lequel le système comprend :
- à la première extrémité (12), une source lumineuse (32) couplée à l'équipement et apte à générer un rayonnement incident de lumière cohérente, injecté dans la fibre à la première extrémité (12) ; et
- au point de mutualisation distant (18), un capteur de lumière (34, 48) sensible à un rayonnement reçu, diffusé par la fibre à la seconde extrémité (16),
**caractérisé en ce que** :
a) la source lumineuse (32) est apte à générer le rayonnement incident sur une longueur d'onde située dans le proche infrarouge et à ne pas générer de rayonnement sur des longueurs d'onde situées dans le domaine visible,
b) la source lumineuse (32) est une source de Classe 1 ou 1M selon IEC 60825-1 édition 3.0,
c) le capteur de lumière (34, 48) est dépourvu de filtre optique anti-IR et est sensible à ladite longueur d'onde située dans le proche infrarouge, et
d) le capteur de lumière (34, 48) inclut en outre une interface de visualisation (48) apte à transformer une image du point de mutualisation (18) formée dans le proche infrarouge en une image dans le domaine visible (44) directement observable par un opérateur utilisant le capteur de lumière.

2. Le système de la revendication 1, dans lequel la source lumineuse (32) est une source apte à générer le rayonnement incident à une puissance ne dépassant pas +10 dBm.

3. Le système de la revendication 1, dans lequel la longueur d'onde située dans le proche infrarouge est une longueur d'onde comprise entre 780 et 1300 nm.

4. Le système de la revendication 3, dans lequel la longueur d'onde située dans le proche infrarouge est une longueur d'onde de 850 nm ± 10 %.

5. Le système de la revendication 1, dans lequel la fibre optique (10) est une fibre optique monomode apte à opérer dans un domaine de longueurs d'onde comprises entre 1260 et 1625 nm.

6. Le système de la revendication 1, dans lequel la longueur de la fibre optique (10) entre la première extrémité (12) et la seconde extrémité opposée (16) est supérieure à 5 km, en particulier comprise entre 5 km et 10 km.

7. Le système de la revendication 1, dans lequel le capteur de lumière (34, 48) est muni d'un filtre optique (46) apte à sélectivement laisser passer ladite longueur d'onde située dans le proche infrarouge et arrêter les longueurs d'onde situées dans le domaine visible, préférentiellement un filtre passe-bande centré sur la longueur d'onde du rayonnement généré par la source lumineuse.

8. Un procédé d'identification et de vérification d'une liaison par fibre optique dans un réseau de communication interconnectant par des fibres optiques une pluralité d'équipements de terminaison optique à des terminaisons respectives groupées au sein d'un point de mutualisation distant (18),
dans lequel une fibre optique (10) s'étend entre un équipement situé à une première extrémité (12) de la fibre et une terminaison située à une seconde extrémité (16), opposée, de la fibre,
le procédé étant **caractérisé en ce qu'**il comprend :
a) l'obtention d'une source lumineuse (32) de Classe 1 ou 1M selon IEC 60825-1 édition 3.0, apte à générer un rayonnement de lumière cohérente sur une longueur d'onde située dans le proche infrarouge et à ne pas générer de rayonnement sur des longueurs d'onde situées dans le domaine visible ;
b) l'obtention d'un capteur de lumière (34, 48) dépourvu de filtre optique anti-IR et sensible à ladite longueur d'onde située dans le proche infrarouge, le capteur de lumière incluant en outre une interface de visualisation (48) apte à transformer une image formée dans le proche infrarouge en une image dans le domaine visible ;
c) le couplage de la source lumineuse (32) à l'équipement ;
d) par la source lumineuse, l'injection dans la fibre (10) d'un rayonnement à la première extrémité (12) ;
e) par le capteur de lumière (34, 48), le recueil au point de mutualisation distant (18) d'un rayonnement diffusé par la fibre (10) à la seconde extrémité ; et
f) par un opérateur utilisant le capteur de lumière (34, 48), l'observation directe de ladite image dans le domaine visible (44) formée sur l'interface de visualisation (48) du capteur de lumière (34, 48), et
g) par l'opérateur, la mise en évidence de la présence d'un rayonnement recueilli par le capteur de lumière, et l'identification de celle de la terminaison du point de mutualisation d'où provient le rayonnement comme étant la terminaison interconnectée à l'équipement auquel la source lumineuse (32) a été couplée.

9. Le procédé de la revendication 8, dans lequel le capteur de lumière (34, 48) comprend un capteur CCD/CMOS et l'étape b) d'obtention du capteur de lumière comprend :
b1) l'obtention d'une caméra vidéo (34) apte à opérer dans le domaine des longueurs d'onde situées dans le domaine visible ; et
b2) le retrait d'un filtre optique anti-IR incorporé à la caméra vidéo.

10. Le procédé de la revendication 9, dans lequel l'étape b) d'obtention du capteur de lumière comprend en outre :
b3) la mise en place devant le capteur CCD/MOS d'un filtre optique (46) apte à sélectivement laisser passer ladite longueur d'onde située dans le proche infrarouge et arrêter les longueurs d'onde situées dans le domaine visible, préférentiellement un filtre passe-bande centré sur la longueur d'onde du rayonnement généré par la source lumineuse.

## Patentansprüche

1. Ein System zur Identifizierung und zur Überprüfung einer Verbindung über Glasfaser in einem Kommunikationsnetz, das über Glasfasern eine Mehrzahl von optischen Endgeräten mit jeweiligen Abschlüssen, die in einem entfernten Bündelungspunkt (18) gruppiert sind, verbindet,
wobei eine Glasfaser (10) sich zwischen einem Gerät, das sich an einem ersten Ende (12) der Faser befindet, und einem Abschluss, der sich an einem gegenüberliegenden zweiten Ende (16) der Faser befindet, erstreckt,
wobei das System umfasst:
- an dem ersten Ende (12), eine Lichtquelle (32), die mit dem Gerät gekoppelt ist und dazu befähigt ist, eine einfallende Strahlung kohärenten Lichts zu erzeugen, die in die Faser an dem ersten Ende (12) eingekoppelt wird; und
- an dem entfernten Bündelungspunkt (18), einen Lichtsensor (34, 48), der gegenüber einer empfangenen Strahlung, die durch die Faser an dem zweiten Ende (16) diffundiert wird, empfindlich ist,
**dadurch gekennzeichnet, dass**:
a) die Lichtquelle (32) dazu befähigt ist, die einfallende Strahlung auf einer Wellenlänge zu erzeugen, die im nahen Infrarotbereich liegt, und keine Strahlung auf Wellenlängen zu erzeugen, die im sichtbaren Bereich liegen,
b) die Lichtquelle (32) eine Quelle der Klasse 1 oder 1M gemäß IEC 60825-1, Ausgabe 3.0, ist,
c) der Lichtsensor (34, 48) kein optisches IR-Sperrfilter aufweist und gegenüber der Wellenlänge empfindlich ist, die im nahen Infrarotbereich liegt, und
d) der Lichtsensor (34, 48) ferner eine Schnittstelle zur Visualisierung (48) aufweist, die dazu befähigt ist, ein Bild des Bündelungspunktes (18), das im nahen Infrarotbereich gebildet wird, in ein Bild im sichtbaren Bereich (44) umzuwandeln, das von einem Bediener, der den Lichtsensor verwendet, unmittelbar beobachtbar ist.

2. Das System nach Anspruch 1, wobei die Lichtquelle (32) eine Quelle ist, die dazu befähigt ist, die einfallende Strahlung bei einer Leistung zu erzeugen, die +10 dBm nicht übersteigt.

3. Das System nach Anspruch 1, wobei die Wellenlänge, die im nahen Infrarotbereich liegt, eine Wellenlänge ist, die zwischen 780 et 1300 nm beträgt.

4. Das System nach Anspruch 3, wobei die Wellenlänge, die im nahen Infrarotbereich liegt, eine Wellenlänge von 850 nm ± 10 % ist.

5. Das System nach Anspruch 1, wobei die Glasfaser (10) eine monomodale Glasfaser ist, die für einen Betrieb in einem Bereich von Wellenlängen befähigt ist, die zwischen 1260 und 1625 nm betragen.

6. Das System nach Anspruch 1, wobei die Länge der Glasfaser (10) zwischen dem ersten Ende (12) und dem gegenüberliegenden zweiten Ende (16) größer als 5 km ist, insbesondere zwischen 5 km und 10 km beträgt.

7. Das System nach Anspruch 1, wobei der Lichtsensor (34, 48) mit einem optischen Filter (46) versehen ist, das selektiv die Wellenlänge, die im nahen Infrarotbereich liegt, passieren lässt und die Wellenlängen, die im sichtbaren Bereich liegen, sperrt, bevorzugt ein Bandpassfilter, das auf die Wellenlänge der durch die Lichtquelle erzeugten Strahlung zentriert ist.

8. Ein Verfahren zur Identifizierung und zur Überprüfung einer Verbindung über Glasfaser in einem Kommunikationsnetz, das über Glasfasern eine Mehrzahl von optischen Endgeräten mit jeweiligen Abschlüssen, die in einem entfernten Bündelungspunkt (18) gruppiert sind, verbindet,
wobei eine Glasfaser (10) sich zwischen einem Gerät, das sich an einem ersten Ende (12) der Faser befindet, und einem Abschluss, der sich an einem gegenüberliegenden zweiten Ende (16) der Faser befindet, erstreckt,
wobei das Verfahren **dadurch gekennzeichnet ist, dass** es umfasst:
a) Bereitstellen einer Lichtquelle (32) der Klasse 1 oder 1M gemäß IEC 60825-1, Ausgabe 3.0, die dazu befähigt ist, eine Strahlung kohärenten Lichts auf einer Wellenlänge zu erzeugen, die im nahen Infrarotbereich liegt, und keine Strahlung auf Wellenlängen zu erzeugen, die im sichtbaren Bereich liegen;
b) Bereitstellen eines Lichtsensors (34, 48), der kein optisches IR-Sperrfilter aufweist und gegenüber der Wellenlänge empfindlich ist, die im nahen Infrarotbereich liegt, und wobei der Lichtsensor ferner eine Schnittstelle zur Visualisierung (48) aufweist, die dazu befähigt ist, ein Bild, das im nahen Infrarotbereich gebildet wird, in ein Bild im sichtbaren Bereich umzuwandeln;
c) Koppeln der Lichtquelle (32) mit dem Gerät;
d) durch die Lichtquelle, Einkoppeln in die Faser (10) einer Strahlung an dem ersten Ende (12);
e) durch den Lichtsensor (34, 48), Empfangen im entfernten Bündelungspunkt (18) einer Strahlung, die durch die Faser (10) an dem zweiten Ende diffundiert wird; und
f) durch einen Bediener, der den Lichtsensor (34, 48) verwendet, unmittelbares Beobachten des Lichts im sichtbaren Bereich (44), das auf der Schnittstelle zur Visualisierung (48) des Lichtsensors (34, 48) gebildet wird, und
g) durch den Bediener, Nachweisen des Vorhandenseins einer Strahlung, die durch den Lichtsensor empfangen wird, und Identifizieren desjenigen Abschlusses des Bündelungspunkts, von wo die Strahlung herstammt, als den Abschluss, der mit dem Gerät, mit dem die Lichtquelle (32) gekoppelt wurde, verbunden ist.

9. Das Verfahren nach Anspruch 8, wobei der Lichtsensor (34, 48) einen CCD-/CMOS-Sensor umfasst, und der Schritt b) des Bereitstellens des Lichtsensors umfasst:
b1) Bereitstellen einer Videokamera (34), die für einen Betrieb in dem Bereich der Wellenlängen befähigt ist, die im sichtbaren Bereich liegen; und
b2) Entfernen eines optischen IR-Sperrfilters, das in die Videokamera eingebaut ist.

10. Das Verfahren nach Anspruch 9, wobei der Schritt b) des Bereitstellens des Lichtsensors ferner umfasst:
b3) Anordnen vor dem CCD-/CMOS-Sensor eines optischen Filters (46), das dazu befähigt ist, selektiv die Wellenlänge, die im nahen Infrarotbereich liegt, passieren zu lassen, und die Wellenlängen, die im sichtbaren Bereich liegen, zu sperren, bevorzugt ein Bandpassfilter, das auf die Wellenlänge der durch die Lichtquelle erzeugten Strahlung zentriert ist.

## Claims

1. A system for identifying and verifying a fibre-optic connection in a communication network interconnecting by optical fibres a plurality of optical termination devices with respective terminations grouped within a remote pooling point (18),
wherein an optical fibre (10) extends between a device located at a first end (12) of the fibre and a termination located at a second, opposite, end (16) of the fibre,
wherein the system comprises:
- at the first end (12), a light source (32), coupled to the device and adapted to generate an incident radiation of coherent light, injected into the fibre at the first end (12); and
- at the remote pooling point (18), a light sensor (34, 48) sensitive to a received radiation, scattered by the fibre at the second end (16),
**characterized in that:**
a) the light source (32) is adapted to generate the incident radiation over a wavelength in the near infrared and not to generate a radiation over wavelengths in the visible domain,
b) the light source (32) is a Class 1 or 1M source according to IEC 60825-1, 3.0 edition,
c) the light sensor (34, 48) is devoid of anti-IR optical filter and is sensitive to said wavelength in the near infrared, and
d) the light sensor (34, 48) further includes a visualization interface (48) adapted to transform an image of the pooling point (18) formed in the near infrared into an image in the visible domain (44) directly observable by an operator using the light sensor.

2. The system of claim 1, wherein the light source (32) is a source adapted to generate the incident radiation at a power that does not exceed +10 dBm.

3. The system of claim 1, wherein the wavelength in the near infrared is a wavelength between 780 and 1300 nm.

4. The system of claim 3, wherein the wavelength in the near infrared is a wavelength of 850 nm ± 10 %.

5. The system of claim 1, wherein the optical fibre (10) is a single-mode optical fibre adapted to operate in a wavelength domain between 1260 and 1625 nm.

6. The system of claim 1, wherein the length of the optical fibre (10) between the first end (12) and the second, opposite end (16) is longer than 5 km, in particular between 5 km and 10 km.

7. The system of claim 1, wherein the light sensor (34, 48) is provided with an optical filter (46) adapted to selectively let through said wavelength in the near infrared and stop the wavelengths in the visible domain, preferentially a band-pass filter centred on the wavelength of the radiation generated by the light source.

8. A method for identifying and verifying a fibre-optic connection in a communication network interconnecting by optical fibres a plurality of optical termination devices with respective terminations grouped within a remote pooling point (18),
wherein an optical fibre (10) extends between a device located at a first end (12) of the fibre and a termination located at a second, opposite, end (16) of the fibre,
the method being **characterized in that** it comprises:
a) obtaining a Class 1 or 1M light source (32) according to IEC 60825-1, 3.0 edition, adapted to generate a radiation of coherent light over a wavelength in the near infrared and not to generate a radiation over wavelengths in the visible domain;
b) obtaining a light sensor (34, 48) devoid of anti-IR optical filter and sensitive to said wavelength in the near infrared, the light sensor further including a visualization interface (48) adapted to transform an image formed in the near infrared into an image in the visible domain;
c) coupling the light source (32) to the device;
d) by the light source, injecting a radiation into the fibre (10) at the first end (12);
e) by the light sensor (34, 48), collecting at the remote pooling point (18) a radiation scattered by the fibre (10) at the second end; and
f) by an operator using the light sensor (34, 48), directly observing said image in the visible domain (44) formed on the visualization interface (48) of the light sensor (34, 48), and
g) by the operator, highlighting the presence of a radiation collected by the light sensor, and identifying that of the pooling point termination from which comes the radiation as being the termination interconnected with the device to which the light source (32) has been coupled.

9. The method of claim 8, wherein the light sensor (34, 48) comprises a CCD/CMOS sensor and step b) of obtaining the light sensor comprises:
b1) obtaining a video camera (34) adapted to operate in the wavelength domain in the visible domain; and
b2) removing an anti-IR optical filter incorporated to the video camera.

10. The method of claim 9, wherein step b) of obtaining the light sensor further comprises:
b3) installing in front of the CCD/MOS sensor an optical filter (46) adapted to selectively let through said wavelength in the near infrared and stop the wavelengths in the visible domain, preferentially a band-pass filter centred on the wavelength of the radiation generated by the light source.
